# EUROPEAN PATENT APPLICATION

(11) **EP 1 882 413 A2**
(43) Date of publication of application: **30.01.2008**
(21) Application number: 07112832.6
(22) Date of filing: 20.07.2007
(51) Int. Cl.: A01K 31/00, A01K 45/00

(54) **Livestock handling and transport housing**

(30) Priority: 28.07.2006 GB 0615020
(71) Applicant: Wrightfield Limited, Mid Suffolk Business Park Langton Green Suffolk IP23 7HU (GB)
(72) Inventor: Wilby, John, DISS, Suffolk IP22 1BE (GB)
(74) Representative: Simons, Alison

(57) **Abstract**

This invention relates to improvements in housing for transport of livestock, particularly small livestock such as chickens from locations where they are reared to factories where they are to be killed and processed. The invention provides a housing for holding a plurality of drawers in which livestock may be transported comprising: a framework comprising runners on which the drawers can slide; a top panel (19) which provides cover for the or each uppermost drawer; wherein the framework comprises a top frame having two upper longitudinal members (4) and upper cross members (10), and in which the two upper longitudinal members are connected in parallel to each other and perpendicular to the upper cross members and are arranged in use to lie above the plane of the upper cross members; the top panel extends over the upper cross members.

## Description

### BACKGROUND

### a. Field of the Invention

This invention relates to improvements in housing for transport of livestock, particularly small livestock such as chickens from locations where they are reared to factories where they are to be killed and processed.

Containers are distributed to farms and the like, and the containers are filled with livestock. The filled containers are then collected and delivered to a processing plant where the livestock are unloaded. The containers are then cleaned and sanitised before being reused.

### b. Related Art

United Kingdom Patent number GB2096555 discloses a system and method for transporting small livestock comprising open topped slideable drawers in a rectangular housing from which they are slid to allow for loading and unloading. Untied Kingdom Patent number 1604299 discloses an apparatus comprising containers having a number of separately operable superposed drawers.

Such housings and drawers are now commonly used in the livestock transport, handling and processing industry.

A problem with containers of the prior art are that the cleaning and sterilisation of the housing is difficult due to the construction of the housing. It is more difficult to sanitise a housing which has more internal corners and ledges where dirt and germs can accumulate. Furthermore if the housing has open edges which can snag or catch the livestock during loading and unloading then the livestock are more likely to be damaged and the housing more likely to become contaminated.

This invention provides an improved housing.

### SUMMARY OF THE INVENTION

A housing for holding a plurality of drawers in which livestock may be transported comprising: a framework comprising runners on which the drawers can slide; a top panel which provides cover for the or each uppermost drawer; wherein the framework comprises a top frame having two upper longitudinal members and upper cross members, and in which the two upper longitudinal members are connected in parallel to each other and perpendicular to the upper cross members and are arranged in use to lie above the plane of the upper cross members; the top panel extends over the upper cross members. This provides a housing which is easier to clean and sanitise than prior art housings.

In the preferred embodiment longitudinal edges of the top panel extend upwards such that the extended edges are parallel with and adjacent to the two upper longitudinal members.

Preferably, the top panel is connected to the upper cross members, and in which the upper cross members are arranged to lie between the outer edges of the plurality of drawers.

In a preferred embodiment the framework comprises a side frame comprising two end upright elements; a plurality of intermediate upright elements; an upper longitudinal element extending between the end upright elements; a lower longitudinal element extending between the end upright elements; and a plurality of intermediate longitudinal elements wherein the lower longitudinal element comprises a single elongate member. Again this provides a housing which is easier to clean and sanitise than prior art housings.

### BRIEF DESCRIPTION OF THE DRAWINGS

The invention will now be described, by way of example only, with reference to the accompanying drawings in which:

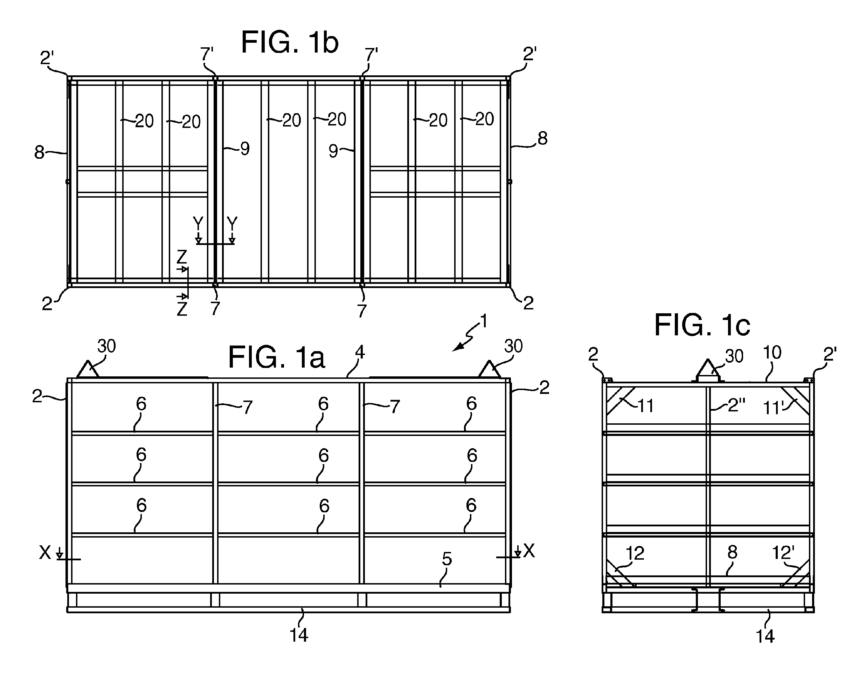

Figure 1 a is a side view of a housing according to the present invention;
Figure 1 b is a section across X-X of Figure 1 ;
Figure 1 c illustrates and end view of the housing of Figure 1;
Figure 2 is a section across Y-Y of Figure 1 b;
Figure 3 is a section across Z-Z of Figure 1 b;
Figure 4 is a section across a corresponding member in a prior art housing;
Figure 5 is a perspective view of the base of a container according to the present invention;
Figure 6 is a perspective view of the base of a prior art housing;
Figure 7 is a perspective view of the top of a prior art container;
Figure 8 is a perspective view of the underside of the top of a prior art container;

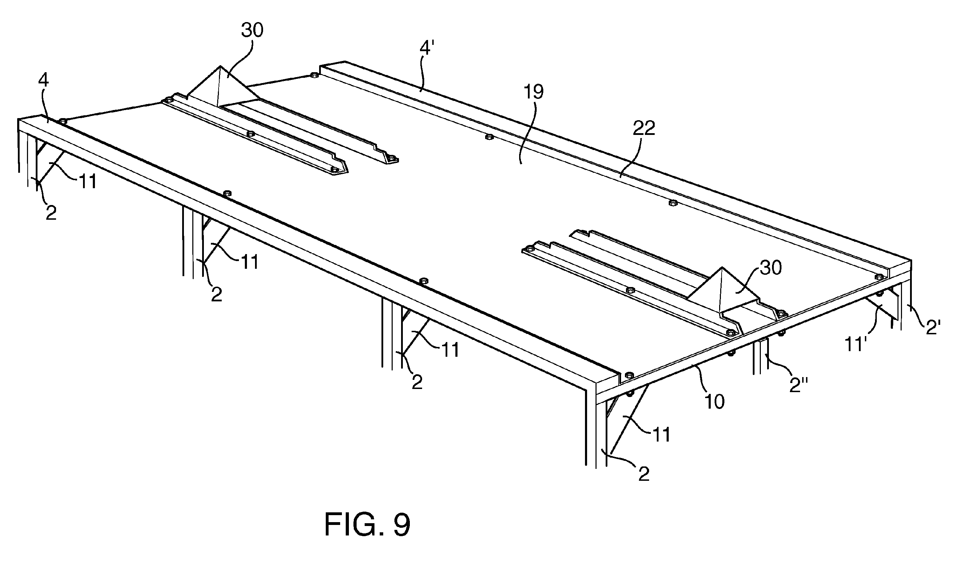

Figure 9 is a perspective view of the top of a container according to the present invention;
Figure 10 is a perspective view of the underside of the top a container according to the present invention.

### DETAILED DESCRIPTION

Referring first to Figure 1a which illustrates a view of one side of a housing 1, the rectangular housing 1 is arranged to receive up to twelve removable drawers. The housing comprises a frame which provides support for the drawers and upon which the drawers can slide in and out of the housing, the frame comprising two end upright elements 2 and two intermediate upright elements 7 on each side of the housing. Extending between the end upright elements 2 and the intermediate upright elements 7 are an upper longitudinal element 4, a lower longitudinal element 5 and intermediate longitudinal elements 6 on each side of the housing.

The housing is supported on a base 14, which will not be described further here. The housing has pyramid structures 30 which locates a plurality of housings together when housings are stacked for transport and storage.

Referring now to Figure 1 b, which illustrates a section through the housing at X-X, corresponding upright elements are connected together by runners and supports. Element of the hidden side of Figure 1a corresponding to those illustrated in Figure 1a are indicated by a prime. Corresponding end upright elements 2,2' are connected by a plurality of side drawer runners 8, corresponding intermediate elements 7,7' are connected by a plurality of intermediate drawer runners 9. A plurality of spaced apart supports 20 also serve to support drawers placed in the housing 1.

Figure 1c is an end view of the housing 1 showing end upright elements 2, 2'. Each end has further end upright element 2". The top of all the corresponding upright elements are connected together by upper cross members 10. Each upper cross member 10 is further connected to the corresponding side upright element by upper braces 11., 11'. Lower braces 12, 12' connect the bottom of corresponding upright elements 2,2' to lower drawer runners 8..

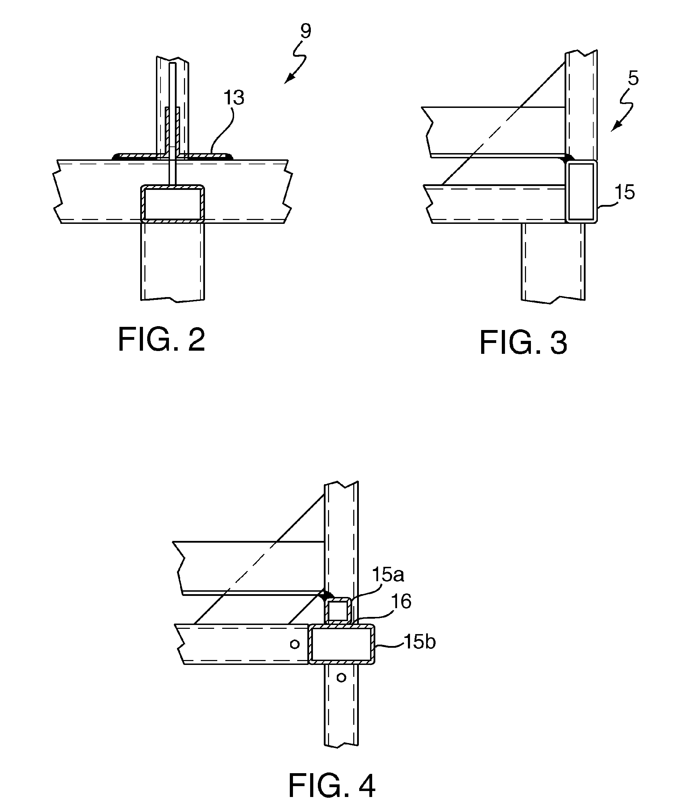

Figure 2 is a cross section at Y-Y of an intermediate drawer runner 9 showing the details of a weld shaded at 13. Figure 3 is a cross section at Z-Z showing an improved lower longitudinal element 5.

Figure 4 is a cross section at a point corresponding to Z-Z of a prior art lower longitudinal element.

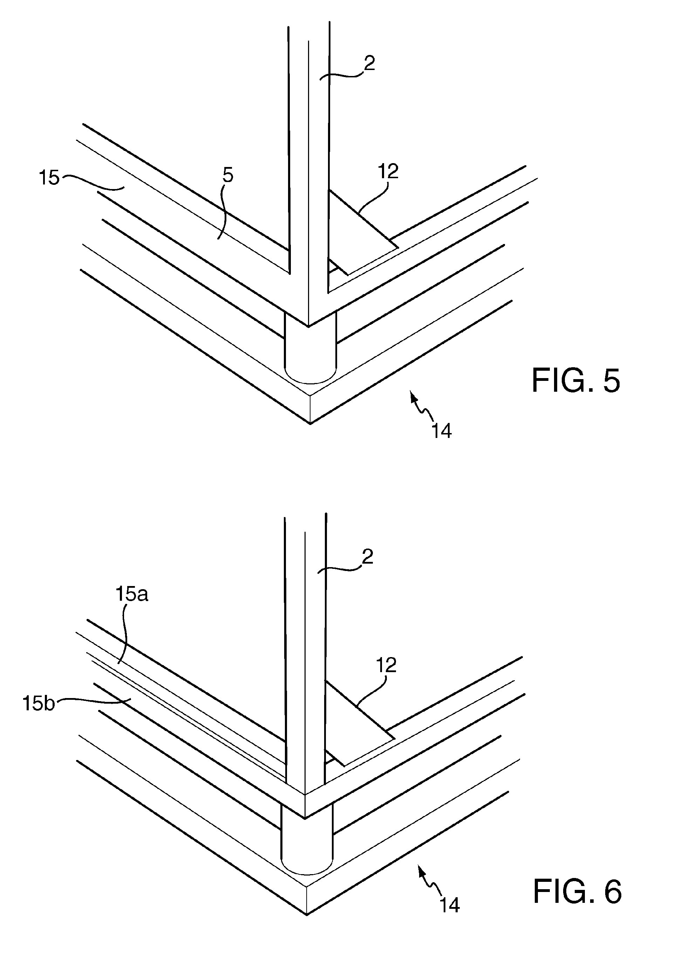

The new and the prior art longitudinal element can be compared in Figures 5 and 6. In the prior art longitudinal member the member comprises two parts 15a, 15b. The longitudinal element of the invention comprise a single part 15, which make manufacture of the housing much more simple, and reduces the number of internal corners (16 Figure 4) where germs and dirt can accumulate.

When drawers are mounted In the housing 1, the bottom of each drawer forms a top for the drawers below. Hence the drawers are loaded from top to bottom once filled with livestock in order to prevent the livestock from escaping.

Clearly it is necessary to have a top panel extending in the plane of the upper longitudinal elements 4 and the upper cross members 10 in order to prevent the livestock in the topmost drawers from escaping.

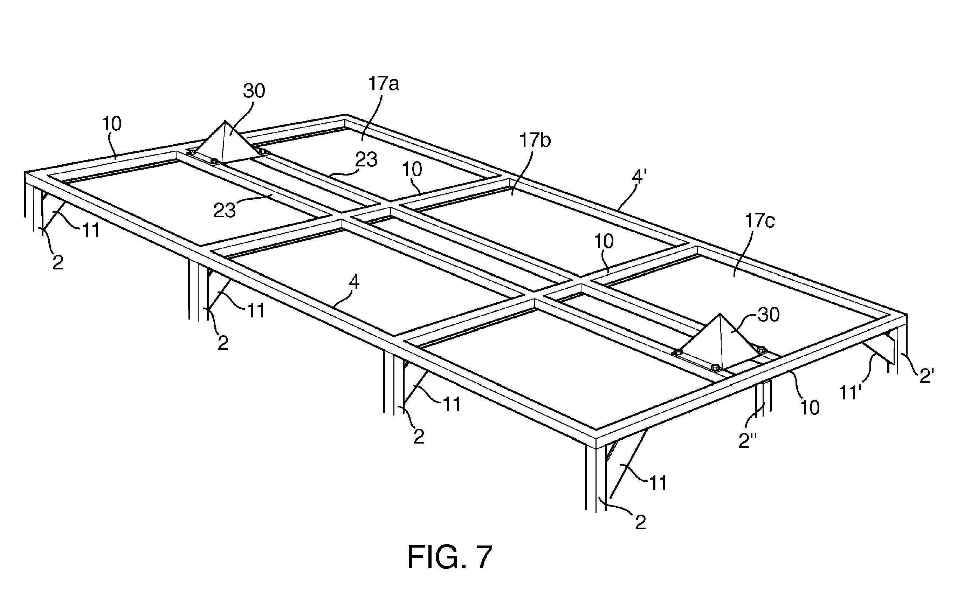

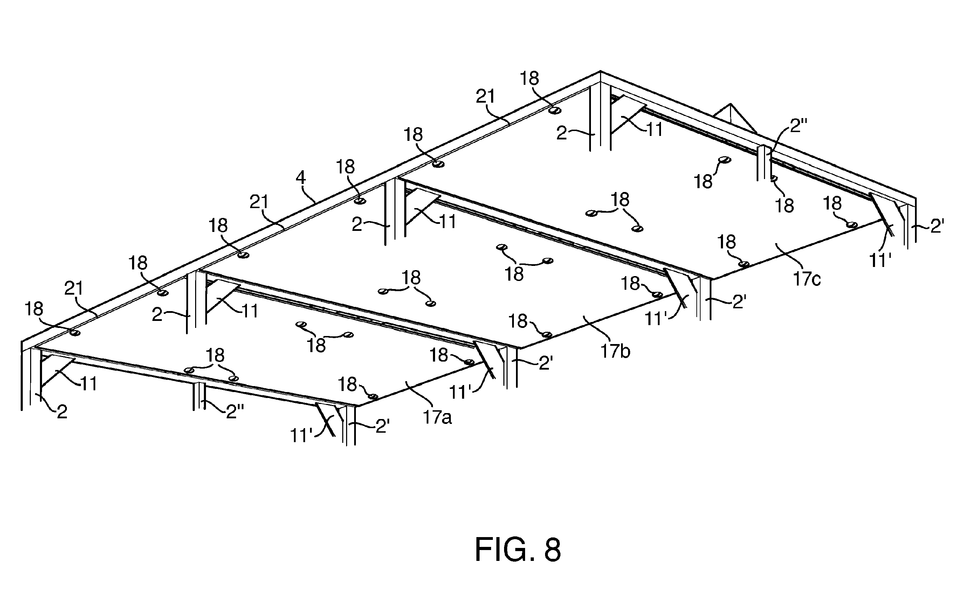

Figures 7 and 8 illustrate the top panels of the prior art housing. It can be seen that there are three top panels 17a, 17b, 17c which are riveted by rivets 18 to the underside of the upper longitudinal elements 4. In the prior art housing there are further upper longitudinal elements 23 extending between upper cross members 10. The top panels 17 are also riveted to the further longitudinal elements 23 by rivets 18. there is a 10mm gap between the edges of each top panel 17a, 17b, 17c and the upper cross members 10.

The internal corners formed by riveting the top panel onto the upper longitudinal elements form edges 21 which can snag and catch on the livestock thus damaging the livestock and allowing the corners to harbour germs and causing them to be difficult to sanitise.

Attempts to overcome this problem have included lengthening the top panels 17a,17b,17c and extending the edges upwards so that the extended edge is parallel to and adjacent to the outside edges of the upper longitudinal elements 4 the top panel this forming a smooth external corner which would not snag or catch the livestock. However, this was not successful as the outer edge of the top panel tended to be knocked during loading and unloading and this could work loose, forming edges to damage the livestock and again making the housing difficult to sanitise sufficiently.

Other attempts to make the top easier to clean have included removing the three top panels and dropping a moulded plastic panel into the top of each section of the module roof section. The moulded plastic was shaped to hook over the upper cross members and extend down into the recess formed in each section by the upper cross members 10 and a portion of the upper longitudinal elements 4 by 25mm in order to make the underside of the top smooth.

An outermost top panel was formed and placed on the top and extended over the outside of the upper longitudinal elements 4 by approx 25mm then bolted on at the top via a pyramid fixing hole and riveted along the upper longitudinal elements 4 and upper cross members 10 In use these further top panels would catch upon each other when the housings were loaded onto lorries or during stacking. This resulted in the outermost top panel tearing and sticking out and this could then cause the housing become stuck in any mechanical handling system. This also affected the cleaning and sanitisation. Furthermore the sharp edges could injure livestock handlers when loading livestock into the top drawers and pushing the drawers into the housing.

In the housing according to the present invention such problems have been overcome by realising that it is possible to provide a single top panel 19 for the entire housing. This has been achieved by connecting the upper longitudinal elements 4 across the top of the upper cross members 10, rather than having the upper longitudinal elements 4 in the same plane as upper cross members 10 as shown in the prior art housing shown in Figures 7 and 8.

The top panel 19 comprises a single sheet connected across the top of the upper cross members 10. In the preferred embodiment each of the longitudinal side edges 22 of the top panel 19 extend upwards so that they are parallel with and adjacent to the inner edges of the upper longitudinal elements 4.

The top panel is connected to the housing by bolts through the upper cross members 10. However, these bolts are not hazardous to the livestock as they are arranged to lie between the outer edged of the drawers.

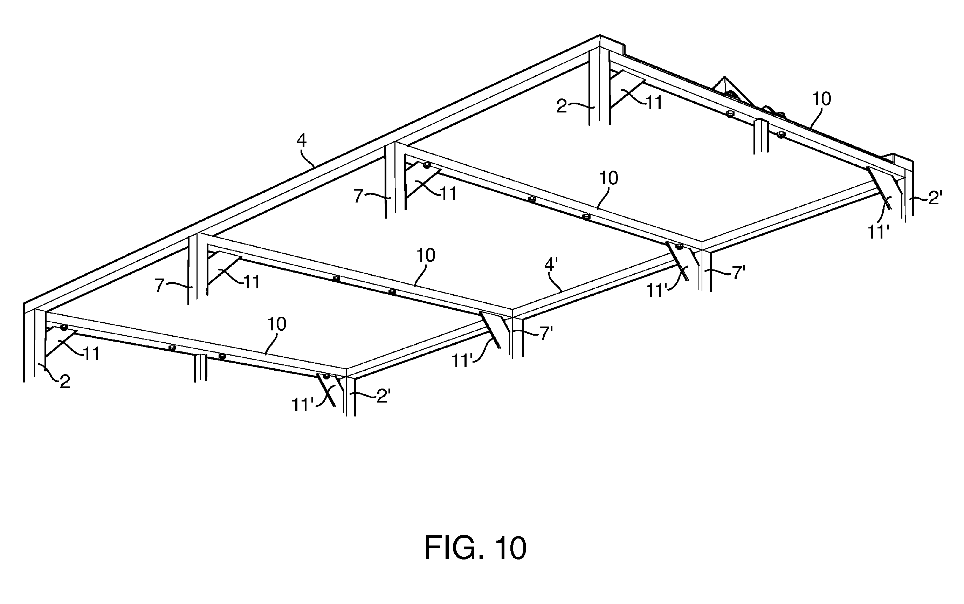

By connecting the top panel 19 to the upper cross members 10 the further longitudinal elements 22 are no longer required (as can be seen in Figure 10) thus reducing the manufacturing costs.

It is an advantage of the housing is galvanised using internal galvanising holes rather than external galvanising holes, thus further improving the ease of sterilising the housing.

Terms such as top, bottom, side, upper and lower have been used throughout this specification. It will be understood that these terms refer to the orientation of the housing as it is designed to be when in use.

It is to be recognised that various alterations, modifications, and/or additions may be introduced into the constructions and arrangements of parts described above without departing from the scope of the present invention as defined in the claims.

## Claims

1. A housing for holding a plurality of drawers in which livestock may be transported comprising:
a framework comprising runners on which the drawers can slide;
a top panel which provides cover for the or each uppermost drawer; wherein the framework comprises a top frame having two upper longitudinal members and upper cross members, and in which
the two upper longitudinal members are connected in parallel to each other and perpendicular to the upper cross members and are arranged in use to lie above the plane of the upper cross members;
the top panel extends over the upper cross members.

2. A housing according to claim1, in which longitudinal edges of the top panel extend upwards such that the extended edges are parallel with and adjacent to the two upper longitudinal members.

3. A housing according to claim 1 or claim 2, in which the top panel is connected to the upper cross members, and in which the upper cross members are arranged to lie between the outer edges of the plurality of drawers.

4. A housing according to any one of the preceding claims, in which the framework comprises a side frame comprising
two end upright elements;
a plurality of intermediate upright elements;
an upper longitudinal element extending between the end upright elements;
a lower longitudinal element extending between the end upright elements; and a plurality of intermediate longitudinal elements wherein
the lower longitudinal element comprises a single elongate member.

5. A housing according to claim 1 or claim 2 wherein the housing comprises a framework for receiving up to twelve drawers.
